# FASCICULE DE BREVET EUROPEEN

(11) **EP 3 099 417 B1**
(45) Date de publication et mention de la délivrance du brevet: **11.04.2018**
(21) Numéro de dépôt: 15705663.1
(22) Date de dépôt: 29.01.2015
(51) Int. Cl.: B04C 5/14, B04C 5/181, B04C 5/185, B04C 9/00

(54) **DISPOSITIF DE FILTRATION D'UN LIQUIDE PAR EFFET CYCLONIQUE**
VORRICHTUNG ZUM FILTERN EINER FLÜSSIGKEIT DURCH ZYKLONISCHE WIRKUNG
DEVICE FOR FILTERING A LIQUID BY CYCLONIC EFFECT

(30) Priorité: 29.01.2014 FR 1450701
(43) Date de publication de la demande: 07.12.2016
(73) Titulaire: PISCINES DESJOYAUX SA, 42480 La Fouillouse (FR)
(72) Inventeur: DEJEY, Marc, F-73100 Aix les Bains (FR); AROT, Florian, F-01470 Montagnieu (FR); DESJOYAUX, Jean-Louis, F-42600 Chalain le Comtal (FR); SAGE, Céline, F-42340 Veauche (FR); PARIN, Thibault, F-42800 Genilac (FR)
(74) Mandataire: Breesé, Pierre
(86) Numéro de dépôt international: PCT/FR2015/050206
(87) Numéro de publication internationale: WO 2015/114260

(56) Documents cités:
- FR-A- 1 416 740
- FR-A1- 2 928 396
- FR-A1- 2 967 922
- US-A- 4 820 414

## Description

L'invention concerne un dispositif de filtration d'un liquide par effet cyclonique.

Plus particulièrement, l'invention trouve une application avantageuse pour la filtration de l'eau notamment d'un bassin de piscine. Plus généralement, l'invention concerne la filtration de tout fluide susceptible de contenir des particules, y compris des fines particules.

Dans le domaine de la filtration de l'eau d'un bassin de piscine, de nombreuses solutions techniques ont été proposées. Par exemple, on peut citer les cartouches filtrantes exécutées à partir d'une trame polyester préformée en accordéon et disposée radialement selon les génératrices d'un cylindre. La base de la cartouche peut être en communication avec un système d'aspiration pour assurer la filtration de l'eau qui arrive généralement par l'extérieur de la cartouche de manière à traverser ses parois. Des problèmes d'encastrement et de nettoyage peuvent apparaitre.

Une autre solution pour assurer la filtration de l'eau, consiste à utiliser un manchon ouvert à l'une de ses extrémités et fermer à son extrémité opposée en formant ainsi une poche. Le manchon est réalisé dans un matériau non tissé avec capacité de filtration. Par exemple, selon l'enseignement du brevet EP 0423043, le manchon, généralement de forme tronconique, est monté dans un support cylindrique dont le fond est en relation avec un système d'aspiration et de refoulement de l'eau. Par dépression, l'eau arrive directement par l'extrémité ouverte du manchon pour être évacuée par le système d'aspiration et de refoulement à l'intérieur du bassin, après avoir été soumise au pouvoir filtrant du manchon.

Le manchon est monté dans le support cylindrique avec capacité d'enlèvement pour être facilement lavable.

Quel que soit ce type de filtration, au moyen d'une cartouche ou d'une poche, il est nécessaire de procéder au nettoyage fréquent de l'élément filtrant ce qui peut, à la longue, constituer une contrainte.

On a également proposé pour assurer la séparation des particules solides contenues dans un liquide, d'utiliser les appareils connus sous le nom d'hydrocyclone et qui mettent en oeuvre la force centrifuge pour une séparation mécanique des particules. Ces appareils comprennent un corps composé d'une partie cylindrique et d'une partie tronconique et dans lesquelles le fluide est introduit tangentiellement à la circonférence du corps au voisinage de sa paroi selon un mouvement giratoire. Sous l'effet de la force centrifuge, les particules solides prises par la force centrifuge sont projetées en direction de la paroi. Le fluide suit la paroi du corps jusqu'au voisinage de l'apex et remonte par effet de vortex en son centre pour être évacué par une ouverture formée coaxialement à la partie supérieure dudit corps. Il a été démontré, pour que la séparation des particules soit effective, il est nécessaire que le temps mis par une particule pour atteindre la paroi, soit inférieur au séjour moyen d'un élément de fluide dans le cyclone. Ces dispositions permettent de dimensionner correctement l'appareil en fonction des résultats recherchés.

Cet effet cyclonique pour assurer la filtration d'un fluide dans le cas d'une piscine, ressort par exemple, de l'enseignement du document FR 2 967 922 qui concerne un appareil de filtration de débris d'un fluide en créant un tourbillon dudit fluide à l'intérieur d'un filtre sous forme d'un hydrocyclone afin d'entraîner le dépôt de certains des débris.

Ces systèmes de filtration par effet cyclonique n'utilisent pas de médian filtrant sous forme de cartouche ou de poche comme indiqué avec les inconvénients en résultant. Toutefois, les résultats obtenus ne sont pas totalement satisfaisants pour filtrer les fines particules qu'il est parfois difficile de séparer du liquide et dont certaines peuvent être reprises au moment de la remontée du liquide et de son évacuation dans la partie supérieure du corps de l'hydrocyclone comme indiqué.

L'invention s'est fixée pour but de remédier à ces inconvénients de manière simple, sûre, efficace et rationnelle.

Le problème que se propose de résoudre l'invention est d'assurer la filtration de tout type de liquide susceptible de contenir des particules de différentes tailles, y compris des micros particules, avec pour objectif de capter la totalité et la quasi-totalité de ces particules en évitant tout phénomène de réinjection par exemple dans une enceinte contenant le liquide à filtrer.

Pour résoudre ce problème, il a été conçu et mis au point un dispositif de filtration d'un liquide par effet cyclonique comprenant un corps tubulaire avec une portée cylindrique prolongée à l'une de ses extrémités par une portée conique de section dégressive, l'autre extrémité de ladite portée cylindrique étant en communication latéralement avec un agencement pour l'entrée du liquide à filtrer d'une manière tangentielle à la circonférence dudit corps au voisinage de sa paroi, de sorte que des particules solides du liquide sous l'effet de la force centrifuge, ont tendance à se plaquer contre la paroi, le fluide suivant ladite paroi jusqu'à l'apex et remontant débarrassé d'au moins certaines particules par le centre du corps pour être évacuées par un agencement coaxial de la portée cylindrique.

Selon l'invention et compte tenu du problème posé à résoudre, l'extrémité de la portée conique considérée au niveau de son apex, présente des moyens aptes à permettre l'extraction et l'évacuation des particules solides captées au niveau de la paroi du corps pour les diriger dans un réservoir en communication avec la l'agencement coaxial.

Il résulte de ces caractéristiques que la totalité des particules captées sont évacuées dans un réservoir de décantation.

Un autre problème que se propose de résoudre l'invention est d'améliorer la captation des particules, à l'entrée de l'hydrocyclone en les dirigeant contre la paroi du corps, et en évitant à certaines particules d'être réinjectées lors de la remontée du liquide.

Pour résoudre un tel problème, le corps présente coaxialement au niveau de sa portée cylindrique des moyens aptes à repousser les particules sur la paroi du corps au moment de l'entrée du liquide et à repousser, lors de la remontée du liquide, les éventuelles particules que pourrait encore contenir le liquide. Il est constitué d'une turbine en son centre, libre en rotation.

Pour résoudre le problème posé de créer un circuit fermé afin d'améliorer le traitement des fines particules, le réservoir en communication avec l'agencement pour la sortie de l'eau est associé à un circuit d'aspiration pour créer un flux continu, un filtre étant disposé entre le réservoir et l'agencement pour la sortie de l'eau avec pour objectif de toujours améliorer la qualité de la filtration par effet cyclonique.

Dans une forme de réalisation, les agencements de l'extrémité de la portée conique au niveau de son apex sont constitués par une turbine disposée en alignement coaxial avec une vis sans fin, ladite turbine et ladite vis étant montées libres en rotation dans un manchon de raccordement et de communication entre ladite extrémité et le réservoir.

Dans une forme de réalisation, les agencements du corps au niveau de sa portée cylindrique sont constitués par une double turbine montée libre en rotation en étant disposé coaxialement à ladite portée cylindrique. La double turbine est constituée de deux turbines concentriques interne et externe, la turbine interne présente des pales orientées pour dévier le flux du liquide entrant contre la paroi du corps tandis que la turbine externe présente des pales orientées pour dévier les particules vers l'extérieur en direction de ladite paroi lors de la remontée du liquide.

Selon une autre caractéristique et pour résoudre le problème posé du nettoyage du réservoir, ce dernier est équipé de moyens aptes à permettre simultanément son alimentation en eau du réseau et la fermeture de l'hydrocyclone en vue de sa vidange en relation avec une conduite externe.

Selon une autre caractéristique, la paroi interne de la portée conique du corps présente des agencements pour faciliter le cheminement vers l'apex des particules captées. Les agencements de la paroi interne de la portée conique du corps sont constitués par une nervure formant un hélicoïde.

Dans une application avantageuse du dispositif selon l'invention, le dispositif de filtration à effet cyclonique est monté en combinaison avec un circuit d'aspiration et de refoulement de l'eau d'un bassin de piscine.

Dans cette application, les agencements pour l'entrée du liquide sont constitués par une canalisation en communication avec l'eau d'un bassin de piscine par l'intermédiaire d'au moins un skimer. Les agencements pour l'évacuation du liquide filtré sont constitués par une canalisation reliée au circuit d'aspiration d'une pompe en vue de son refoulement dans un bassin de piscine.

L'invention est exposée ci-après plus en détail à l'aide des figures des dessins annexés dans lesquels :

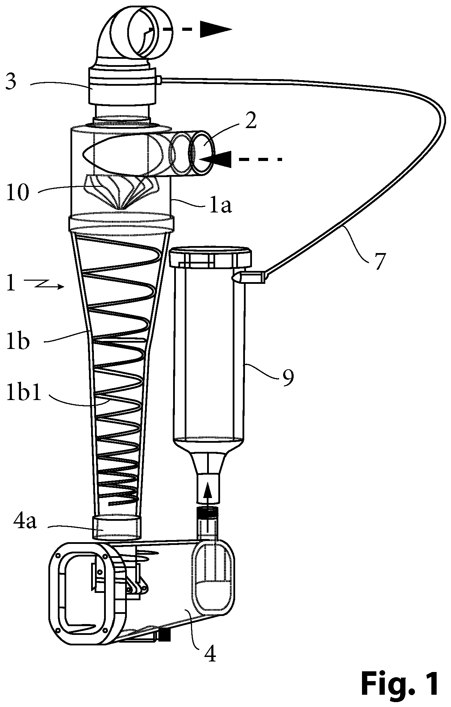

- la figure 1 est une vue en perspective montrant le principe de fonctionnement du dispositif de filtration d'un liquide par effet cyclonique selon les caractéristiques de l'invention ;

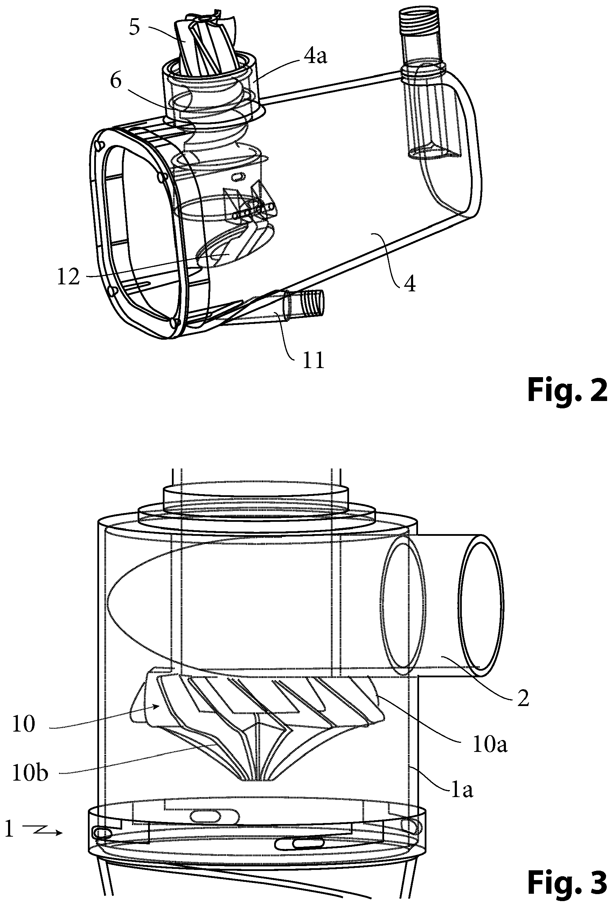

- la figure 2 est une vue en perspective d'un exemple de réalisation des moyens aptes à permettre l'extraction et l'évacuation des particules solides captées au niveau de la paroi du corps et du réservoir agencé pour son alimentation en eau du réseau et pour la fermeture de l'hydrocyclone ;
- la figure 3 est une vue en perspective d'un exemple de réalisation des moyens montés à l'entrée de l'hydrocyclone afin de repousser les particules contre la paroi du corps ;

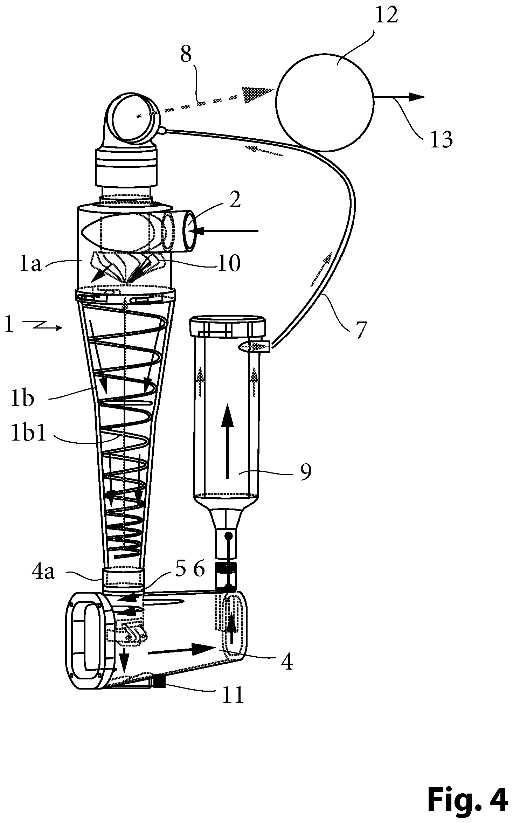

- la figure 4 est une vue en perspective d'un exemple de réalisation des moyens montés à l'entrée de l'hydrocyclone afin de repousser les particules contre la paroi du corps.

Le dispositif de filtration selon les caractéristiques de l'invention comprend un corps (1) qui constitue un hydrocyclone comportant dans sa partie supérieure une portée cylindrique (1a) prolongée, à l'une de ses extrémités, par une portée conique (1b) de section dégressive en direction du bas. La portée cylindrique (1a) de l'hydrocyclone est en communication latéralement avec un agencement sous forme par exemple d'une canalisation (2), pour l'entrée du liquide dans l'hydrocyclone. La canalisation (2) est convenablement disposée de sorte que le liquide à filtrer, entre d'une manière tangentielle à la circonférence du corps (1) au voisinage de sa paroi interne de sorte que les particules solides susceptibles d'être contenues dans le liquide, ont tendance à être plaquées contre ladite paroi sous l'effet de la force centrifuge. Le fluide suit la paroi du corps (1) jusqu'à l'apex de la partie tronconique (1b) et, par effet vortex, remonte par le centre du corps en étant débarrassé d'une certaine quantité de particules. Le liquide est ensuite évacué par un agencement par exemple sous forme d'une canalisation (3) disposée coaxialement à la partie supérieure de la portée cylindrique (1a). Ces caractéristiques sont parfaitement connues pour un homme du métier et constituent le principe général d'une filtration par effet cyclonique.

Selon une caractéristique de l'invention, la portée tronconique (1b) au niveau de l'apex, présente des agencements qui ont pour fonction d'assurer l'extraction et l'évacuation des particules solides captées afin de les diriger dans un réservoir (4). Ces moyens sont constitués par une turbine (5) disposée en alignement coaxial avec une vis sans fin (6). La turbine (5) et la vis (6) sont montées libres en rotation dans un manchon de raccordement (4a) monté à l'extrémité libre de la portée tronconique (1b) et en communication avec le réservoir (4). Sous l'effet de l'entraînement en rotation de la turbine (5) et de la vis (6) par le liquide, les particules captées au niveau de la paroi de l'hydrocyclone sont extraites de ladite paroi pour être dirigé dans le réservoir (4) où elles ne sont plus soumises à la puissance de l'effet cyclonique supprimant, par conséquent, les risques, au bout d'un certain temps, de remonter avec le liquide.

Selon une autre caractéristique pour accélérer ce phénomène d'extraction des particules, il est important de créer un flux continu au niveau du réservoir (4) pour maintenir les particules dans ledit réservoir. Dans ce but, l'hydrocyclone travaille en circuit fermé et en dépression. Ainsi, le réservoir (4) est en communication par une conduite (7) ou autre, avec la canalisation de sortie d'eau (3) en combinaison avec un circuit d'aspiration (8).

Avantageusement à la sortie du réservoir (4), pour le retour de l'eau en circuit fermé, est monté un filtre (9) de tout type connu et approprié.

Un autre problème important que se propose de résoudre l'invention est d'éviter de réinjecter certaines particules qui, sous l'effet de l'oeil du cyclone, ont tendance à remonter. C'est le cas notamment des fines particules. Dans ce but, la portée cylindrique (1a) du corps de l'hydrocyclone présente coaxialement, en alignement avec la sortie (3), des moyens aptes à repousser les particules sur la paroi du corps au moment de l'entrée du liquide et à repousser, lors de la remontée du liquide, les éventuelles particules que pourrait encore contenir ledit liquide. Dans une forme de réalisation les moyens sont constitués par une double turbine (10) montée libre en rotation en étant disposée coaxialement à la portée (1a) en alignement avec la sortie d'eau (3) comme indiqué. Comme le montre les figures des dessins, cette double turbine (10) est constituée d'une turbine interne (10a) et d'une turbine externe (10b). La turbine interne (10a) présente des pales orientées pour dévier le flux du liquide entrant et par conséquent les particules, contre la paroi du corps. La turbine externe (10b) présente des pales orientées pour dévier les particules vers l'extérieur toujours en direction de la paroi lors de la remontée du liquide.

Il résulte donc de ces dispositions que les impuretés et autres particules solides ayant tendance à remonter avec le liquide, sont projetées sur l'extérieur en dehors du flux.

Toujours en ayant pour objectif d'améliorer l'efficacité de l'hydrocyclone, la paroi interne de la portée tronconique (1b) présente des agencements pour faciliter le cheminement vers l'apex des particules captées. Ces agencements sont avantageusement constitués par une nervure (1b1) formant un hélicoïde.

Selon une autre caractéristique, le réservoir (4) est équipé de moyens aptes à permettre simultanément son alimentation en eau du réseau ou du groupe de filtration et la fermeture de l'hydrocyclone.

Le but de ces dispositions est de permettre la vidange du réservoir en relation avec une conduite externe (11) pour l'évacuation des particules solides captées. Par exemple, dans une forme de réalisation ces moyens peuvent être constitués par un système à clapets (12) monté au niveau de la jonction de l'apex de la portée tronconique (1b) avec le réservoir (4), sous la vis sans fin (6).

En considérant l'efficacité de la filtration obtenue, le dispositif selon les caractéristiques de l'invention peut être appliqué avantageusement pour la filtration de tout type de particules solides, y compris les fines particules susceptibles d'être contenues dans tout type de liquide ou fluide.

Le dispositif trouve une application avantageuse dans le domaine de la filtration des bassins de piscine. Dans ce but, le dispositif est monté en combinaison avec un circuit d'aspiration et de refoulement de l'eau du bassin de la piscine considérée. Par exemple, dans une forme de réalisation, la canalisation (2) de l'entrée d'eau à filtrer est en communication avec l'eau du bassin de la piscine par au moins un skimer. La canalisation (3) d'évacuation de l'eau filtrée est reliée au circuit d'aspiration (8) d'une pompe (12) en vue de son refoulement par une canalisation (13) dans le bassin de la piscine.

Les avantages ressortent bien de la description, en particulier on souligne et on rappelle :
- le fonctionnement de l'hydrocyclone en boucle fermée avec système de circulation par force centrifuge et à effet vortex en son centre en créant un flux continu du liquide dans la partie basse de l'hydrocyclone au niveau du réservoir de décantation,
- le montage d'une turbine combinée avec une vis sans fin en bas de l'hydrocyclone, sous l'oeil du cyclone, afin d'extraire les particules et les déplacer dans un bac de rétention avec, pour conséquence, d'éviter de reprendre certaines particules préalablement captées et isolées.
- La double turbine sur le retour de l'hydrocyclone est entrainée par la rotation de l'eau et de repousser les particules solides contre les parois de l'hydrocyclone tant au niveau de l'entrée de l'eau qu'au niveau de sa sortie.

## Revendications

1. Dispositif de filtration d'un liquide par effet cyclonique comprenant un corps tubulaire (1) avec une portée cylindrique (1a) prolongée à l'une de ses extrémités par une portée conique (1b) de section dégressive, l'autre extrémité de ladite portée cylindrique étant en communication latéralement avec un agencement (2) pour l'entrée du liquide à filtrer d'une manière tangentielle à la circonférence dudit corps (1) au voisinage de sa paroi de sorte que des particules solides du liquide, sous l'effet de la force centrifuge, ont tendance à se plaquer contre la paroi, le fluide suivant ladite paroi jusqu'à l'apex et remontant débarrassé d'au moins certaines particules par le centre du corps (1) pour être évacué par un agencement coaxial (3) de la portée cylindrique (1a) ***caractérisé* en ce que** l'extrémité de la portée conique (1b) considérée au niveau de son apex, présente des moyens (5-6) aptes à permettre l'extraction et l'évacuation des particules solides captées au niveau de la paroi du corps pour les diriger dans un réservoir (4) en communication avec l'agencement coaxial (3)..

2. Dispositif selon la revendication 1, ***caractérisé* en ce que** le corps (1) présente coaxialement au niveau de sa portée cylindrique (1a), des moyens (10) aptes à repousser les particules sur la paroi du corps (1) au moment de l'entrée du liquide et à repousser, lors de la remontée du liquide (1) les éventuelles particules que pourrait encore contenir le liquide.

3. Dispositif selon la revendication 1, ***caractérisé* en ce qu'**il comprend un filtre (9) disposé entre le réservoir (4) et l'agencement coaxial (3).

4. Dispositif selon l'une quelconque des revendications 1 à 3, ***caractérisé* en ce que** la paroi interne de la portée conique (1b) du corps présente des agencements (1b1) pour faciliter le cheminement vers l'apex des particules captées.

5. Dispositif selon la revendication 1, ***caractérisé* en ce que** les agencements de l'extrémité de la portée conique (1b) au niveau de son apex, sont constitués par une turbine (5) disposée en alignement coaxial avec une vis sans fin (6), ladite turbine (5) et ladite vis (6) étant montées libres en rotation dans un manchon de raccordement et de communication (4a) entre ladite extrémité et le réservoir (4).

6. Dispositif selon la revendication 2, ***caractérisé* en ce que** les moyens que présente le corps au niveau de sa portée cylindrique (1a) sont constitués par une double turbine (10) montée libre en rotation en étant disposé coaxialement à ladite portée cylindrique.

7. Dispositif selon la revendication 6, ***caractérisé* en ce que** la double turbine (10) est constituée de deux turbines concentriques interne et externe, la turbine interne (10a) présente des pales orientées pour dévier le flux du liquide entrant contre la paroi du corps tandis que la turbine externe (10b) présente des pales orientées pour dévier les particules vers l'extérieur en direction de ladite paroi lors de la remontée du liquide.

8. Dispositif selon la revendication 1, ***caractérisé* en ce que** le réservoir (4) est équipé de moyens aptes à permettre simultanément son alimentation en eau du réseau ou du groupe de filtration et la fermeture de l'hydrocyclone en vue de sa vidange en relation avec une conduite externe.

9. Dispositif selon la revendication 4, ***caractérisé* en ce que** les agencements (1b1) de la paroi interne de la portée conique (1b) du corps sont constitués par une nervure formant une hélicoïde.

10. Dispositif selon l'une quelconque des revendications 1 à 9, ***caractérisé* en ce qu'**il est monté en combinaison avec un circuit d'aspiration (8) et de refoulement de l'eau d'un bassin de piscine.

11. Dispositif selon la revendication 10, ***caractérisé* en ce que** les agencements pour l'entrée du liquide est constitué par une canalisation (2) en communication avec l'eau du bassin de piscine par l'intermédiaire d'au moins un skimer.

12. Dispositif selon l'une quelconque des revendications 10 à 11, ***caractérisé* en ce que** les agencements pour l'évacuation du liquide filtré sont constitués par une canalisation (3) reliée au circuit d'aspiration (8) d'une pompe (12) en vue de son refoulement dans un bassin de piscine.

## Patentansprüche

1. Flüssigkeitsfiltervorrichtung mit Zyklonwirkungen, welche einen röhrenförmigen Körper (1) mit einem Zylinderlager (1a) umfasst, das an einem seiner Enden durch ein Zylinderlager (1b) mit degressivem Querschnitt verlängert wird, wobei die andere Seite des besagten Zylinderlagers seitlich mit einer Anordnung (2) zum Eintritt der Filterflüssigkeit tangential zum Umfang des besagten Körpers (1) neben dessen Wand in Verbindung steht, sodass die Feststoffteilchen der Flüssigkeit unter Einwirkung der Zentrifugalkraft Tendenz haben, gegen die Wand gedrückt werden, sich das Fluid an der besagten Wand entlang bis zum Scheitelpunkt bewegt, befreit von zumindest einigen Feststoffteilchen durch die Mitte des Körpers (1) nach oben steigt, und über eine koaxiale Anordnung (3) des Zylinderlagers (1a) abgeleitet wird, **dadurch gekennzeichnet, dass** das Ende des Zylinderlagers (1b) in Höhe seines Scheitelpunktes Mittel (5-6) aufweist, die die Extraktion und Ableitung der an der Wand des Körpers erfassten Feststoffteilchen ermöglicht, um sie in einen Behälter (4) zu leiten, der mit der koaxialen Anordnung (3) in Verbindung steht.

2. Vorrichtung nach Anspruch 1, **dadurch gekennzeichnet, dass** der Körper (1) koaxial zu seinem Zylinderlager (1a) Mittel (10) aufweist, die in der Lage sind, die Feststoffteilchen bei Eintreten der Flüssigkeit an die Wand des Körpers (1) zu drücken und die eventuell noch in der Flüssigkeit verbliebenen Feststoffteilchen beim Aufsteigen der Flüssigkeit (1) zurück zu halten.

3. Vorrichtung nach Anspruch 1, **dadurch gekennzeichnet, dass** sie einen Filter (9) umfasst, der zwischen dem Behälter (4) und der koaxialen Anordnung (3) angeordnet ist.

4. Vorrichtung nach einem der Ansprüche 1 bis 3, **dadurch gekennzeichnet, dass** die Innenwand der Zylinderauflage (1b) des Körpers Anordnungen (1b1) aufweist, die das Befördern der erfassten Partikel zum Scheitelpunkt erleichtern.

5. Vorrichtung nach Anspruch 1, **dadurch gekennzeichnet, dass** die Anordnungen am Ende der Zylinderauflage (1b) in Höhe des Scheitelpunktes aus einer Turbine (5) bestehen, die in koaxialer Ausrichtung zu einer Schnecke (6) angeordnet ist, wobei besagte Turbine (5) und besagte Schnecke (6) frei drehend in eine Verbindungsmuffe (4a) zwischen besagtem Ende und dem Behälter (4) montiert sind.

6. Vorrichtung nach Anspruch 2, **dadurch gekennzeichnet, dass** die Mittel, welche der Körper an seinem Zylinderlager (1a) aufweist, aus einer Doppelturbine (10) bestehen, die koaxial zum besagten Zylinderlager frei drehend montiert ist.

7. Vorrichtung nach Anspruch 6, **dadurch gekennzeichnet, dass** die Doppelturbine (10) aus einer inneren und einer äußeren konzentrischen Turbine besteht, wobei die innere Turbine (10a) Schaufeln aufweist, die so gerichtet sind, dass der eintretende Flüssigkeitsstrom gegen die Wand des Körpers gelenkt wird, wohingegen die äußere Turbine (10b) Schaufeln aufweist, die so gerichtet sind, dass die Feststoffteilchen beim Hochsteigen der Flüssigkeit nach außen in Richtung der besagten Wand umgelenkt werden.

8. Vorrichtung nach Anspruch 1, **dadurch gekennzeichnet, dass** der Behälter (4) mit Mitteln ausgestattet ist, die das gleichzeitige Zuführen von Wasser aus dem Versorgungsnetz oder Filteraggregat und das Schließen des Hydrozyklons zwecks Entleerung über eine externe Leitung ermöglichen.

9. Vorrichtung nach Anspruch 4, **dadurch gekennzeichnet, dass** die Anordnungen (1b1) an der Innenwand des Zylinderlagers (1b) des Körpers durch eine schraubenfäöige Rippe gebildet werden, welche eine Schraube formt.

10. Vorrichtung nach einem der Ansprüche 1 bis 9, **dadurch gekennzeichnet, dass** sie mit einem Saugkreislauf (8) und Förderkreislauf eines Schwimmbades kombiniert wird.

11. Vorrichtung nach Anspruch 10, **dadurch gekennzeichnet, dass** die Anordnungen für das Eintreten der Flüssigkeit aus einer Rohrleitung (2) bestehen, die über mindestens einen Skimmer mit dem Wasser des Schwimmbeckens verbunden ist.

12. Vorrichtung nach einem der Ansprüche 10 bis 11, **dadurch gekennzeichnet, dass** die Anordnungen zur Ableitung der gefilterten Flüssigkeit aus einer Rohrleitung (3) bestehen, die mit dem Saugkreislauf (8) einer Pumpe (12) verbunden ist, damit die Flüssigkeit in ein Schwimmbecken gepumpt wird.

## Claims

1. A device for filtering a liquid by cyclonic effect comprising a tubular body (1) with a cylindrical segment (1a) extended at one of its ends by a conical segment (1b) with a tapering section, with the other end of said cylindrical segment being in side communication with a fitting (2) for the entry of the liquid to be filtered tangentially to the circumference of said body (1) next to the wall thereof so that, under the effect of the centrifugal force, solid particles from the liquid tend to be pressed against the wall, with the fluid following said wall up to the apex thereof and rising up while being free of at least some of the particles via the centre of the body (1) so as to be discharged via a coaxial fitting (3) of the cylindrical segment (1a), ***characterized* in that** the end of the conical segment (1b) considered at the apex thereof, has means (5-6) capable of enabling the extraction and the discharge of the solid particles collected at the wall of the body in order to guide same into a tank (4) in communication with the coaxial fitting (3).

2. A device according to claim 1, ***characterized* in that** the body (1) has, at the cylindrical segment (1a) thereof, coaxial means (10) capable of pushing back the particles onto the wall of the body (1) when the liquid goes in and of pushing back any particles that the liquid might still contain, while the liquid (1) rises.

3. A device according to claim 1, ***characterized* in that** it comprises a filter (9) positioned between the tank (4) and the coaxial fitting (3).

4. A device according to any one of claims 1 to 3, ***characterized* in that** the inner wall of the conical segment (1b) of the body has fittings (lbl) aiming at facilitating the flow of the collected particles toward the apex.

5. A device according to claim 1, ***characterized* in that** the fittings at the end of the conical segment (lb) at the apex thereof, consist of a turbine (5) positioned in coaxial alignment with an endless screw (6), with said turbine (5) and said screw (6) being so mounted as to freely rotate in a connection and communication sleeve (4a) between said end and the tank (4).

6. A device according to claim 2, ***characterized* in that** the means that the cylindrical segment (1a) of the body has consists of a dual turbine (10) so mounted as to freely rotate by being positioned coaxially to said cylindrical segment.

7. A device according to claim 6, ***characterized* in that** the dual turbine (10) consists of two internal and external concentric turbines, the internal turbine (10a) has blades so oriented as to deflect the flow of the incoming liquid against the wall of the body whereas the external turbine (10b) has blades so oriented as to deflect the particles outwards, toward said wall while the liquid rises.

8. A device according to claim 1, ***characterized* in that** the tank (4) is equipped with means capable of simultaneously enabling the supply thereof with water from the filtration network or unit and the closing of the hydrocyclone for the emptying thereof using an outer pipe.

9. A device according to claim 4, ***characterized* in that** the fittings (lbl) of the inner wall of the conical segment (1b) of the body consist of a rib forming a helicoid.

10. A device according to any one of claims 1 to 9, ***characterized* in that** it is so mounted as to be combined with a circuit (8) for sucking and discharging water from/into a swimming pool.

11. A device according to claim 10, ***characterized* in that** the fittings for the entry of the liquid consist of a duct (2) in communication with the water of the swimming pool via at least one skimmer.

12. A device according to any one of claims 10 to 11, ***characterized* in that** the fittings for discharging the filtered liquid consist of a duct (3) connected to the suction circuit (8) of a pump (12) for the discharge thereof into a swimming pool.
